Europäisches Patentamt

**European Patent Office**

**Office européen des brevets**

(11) Publication number: **0 246 810**
**A1**

# EUROPEAN PATENT APPLICATION

(21) Application number: **87304267.5**

(22) Date of filing: **14.05.87**

(51) Int. Cl.³: **B 60 G 11/12**
**F 16 F 1/36**

(30) Priority: **17.05.86 GB 8612069**

(43) Date of publication of application:
**25.11.87 Bulletin 87/48**

(84) Designated Contracting States:
**ES**

(71) Applicant: **GKN TECHNOLOGY LIMITED**
**Birmingham New Road**
**Wolverhampton West Midlands WV4 6BW(GB)**

(72) Inventor: **Spedding, Colin Edward**
**11 lansdowne Avenue Codsall**
**Wolverhampton West Midlands WV8 2EN(GB)**

(74) Representative: **Dodd, Graham Marshall et al,**
**Guest Keen and Nettlefolds plc Group Patents and**
**Licensing Department P.O. Box 55 Ipsley House Ipsley**
**Church Lane**
**Redditch Worcestershire B98 0TL(GB)**

(54) Securing components to leaf springs of composite material.

(57) A component (10), particularly a slipper member, is held to a leaf spring of fibre-reinforced plastics material by first portions (14, 15) spaced such that the spring can be passed therebetween when the component is held at an inclination to the spring, but which engage the spring firmly when the component is held parallel to the spring, and a further portion (19) held to the spring by a fastening element (22). An inter-engaging projection and recess (17, 25) are provided for preventing movement of the component lengthwise of the spring.

FIG 3.

FIG.4.

GMD/86026

SECURING COMPONENTS TO
LEAF SPRINGS OF COMPOSITE MATERIAL

This invention relates to leaf springs made of composite, fibre-reinforced plastics, material, and more particularly to the securing of components to such springs.

One example to which the invention is applicable is a leaf spring having a so-called "slipper end". This is one means by which the change in the distance between the ends of the spring can be accommodated, as the load on the spring changes. One end of the spring is pivotally mounted at a fixed position on the structure or apparatus, e.g. the chassis of a motor vehicle, where it is to be used, and the other end of the spring bears against a supporting surface on the structure or apparatus and has sliding movement relative thereto as the spring load changes. Sliding movement is also required between individual leaves of a spring comprising two or more leaves, as the spring deflects.

In leaf springs made of steel, it is usual to arrange for such sliding movement to occur directly on the surface of the spring leaf or leaves. The resistance of the spring leaves to abrasion is adequate for this purpose. In the case of leaf springs made of composite material, however, the resistance of the spring material to abrasion is not satisfactory, particularly if the spring is operating in a dirty environment as would be the case in a motor vehicle. Accordingly it is desirable to provide a composite leaf spring with an element of an appropriate wear resistant material at any point where relative sliding movement is likely to occur. It is difficult satisfactorily to attach such a wear resistant element to a composite spring in a manner which does not take up excessive space and yet is reliable. It has been found that the use of adhesives alone for such purpose is not satisfactory in service, and any method involving the provision of a hole or holes in the spring is not acceptable because of the detrimental effect on the properties of the spring caused thereby.

Further examples to which the invention is applicable are the securement of components to springs to protect the springs against impacts. For example, the component may be arranged to engage a stop to limit deflection of the spring. The component may carry an elastomeric element which acts as or forms part of an auxiliary spring. The component may even be simply a weight, secured to the spring so as to alter a resonant vibration frequency of the spring, which is a requirement which sometimes arises particularly in motor vehicle applications. Also in motor vehicles, the component may be required to protect the spring from engagement by a jack, if the spring is used as a jacking point.

It is the object of the present invention to provide for attachment of a component such as a slipper member to a leaf spring of composite material, in a manner which is effective and readily utilised, without the disadvantages of the attachment methods above described.

According to one aspect of the present invention, we provide a component for securement to a leaf spring of composite material, the component comprising portions so disposed relative to one another as to permit the spring to be passed therebetween when the component is maintained at a first orientation relative to the spring, and firmly to engage opposite surfaces of the spring when the component is maintained in a second orientation relative to the spring (which second orientation is that required of the component in use), the component further comprising a portion for engagement by a fastening element for holding the component to the spring in said second orientation.

Thus, a component according to the invention may be fitted to a spring by the spring being passed between the first said portions of the component while the component is held at a suitable orientation relative to the spring, the component subsequently being moved to its orientation it requires in use and a suitable fastening element being applied to hold it in position. The component is held to the spring both by the first said portions of the component and by the fastening element, so that it is securely fixed to the spring and yet only a single separate fastening element is required.

Preferably the first said portions of the component are so disposed relative to one another that plastic deformation of the component is caused to occur during movement thereof from said first to said second orientation relative to the spring. As described hereafter, this enables variations in the spring dimensions, which are likely to arise in mass production, to be accommodated.

A typical leaf spring made of composite material is of generally rectangular shape in cross-section (usually with rounded or chamfered corners). For engagement with such a spring, the first said portions of the component may be generally parallel to one another with surfaces to engage, when in said second orientation, with spaced surfaces of the spring facing in opposite directions, said surfaces of the portions being perpendicularly spaced from one another by a distance substantially equal to the minimum expected thickness of the spring, and said portions being offset from one another to define a space through which the spring can be passed when a component is in said first orientation. Preferably the first said portions of the component are connected by side wall portions which are engagable with side surfaces of the spring, so that the spring is firmly embraced by the component.

Preferably the component has at least one of the first said portions thereof provided with a formation engagable with a complementary formation in the spring, to prevent relative movement, lengthwise of the spring, between the spring and component. Such formation may comprise a projection, engagable with a recess in the spring.

The component described hereafter is a slipper member, having a wear resistant surface.

The invention also provides an assembly comprising a component as above defined and a leaf spring, the leaf spring being engaged between the first said portions of the component and a component being held in said second orientation by a fastening element.

Such fastening element may comprise an element extending transversely around the component and spring, and preferably is an annular metal band which is deformed to engage the component and spring so that it is unable to become displaced from the component.

Preferably such a fastening element is spaced from the free end of the spring leaf, whilst the remainder of the component, and in particular a projection engaging with a recess in the spring, is nearer to the free end of the spring. Any effect of a recess in the spring on the properties of the spring is minimised if the recess is adjacent the free end of the spring.

The invention will now be described by way of example with reference to the accompanying drawings, of which:-

Figure 1 is an elevation of a leaf spring provided at one of its ends with a slipper member;

Figure 2 is a perspective view of the slipper member, and its fastening element;

Figures 3 and 4 are diagrammatic sections through the slipper member and part of the spring, showing the manner of assembly thereof;.

Figure 5 is a longitudinal section through a further embodiment of slipper member;

Figure 6 is a plan view of the member of Figure 5;

Figure 7 is an end view of the member of Figures 5 and 6.

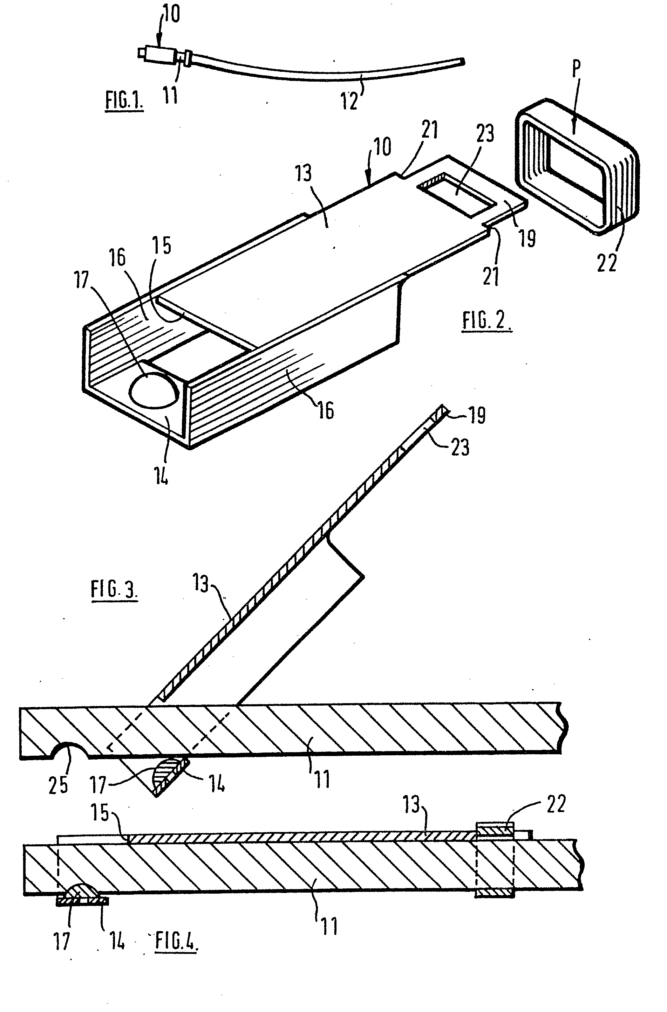

Referring firstly to Figure 1 of the drawings, there is shown a leaf spring 12 made of composite, fibre reinforced plastics, material. The leaf spring is intended to be used in a motor vehicle suspension, particularly as one leaf in a spring assembly comprising two or more leaves. In such a spring assembly, relative movement occurs between the leaves in the direction lengthwise thereof as the spring is deflected in use, and since a composite material is one which is relatively vulnerable to damage from abrasion, it is desirable to provide a composite spring leaf, in the region where it is vulnerable to such damage, with a member to protect it. In a spring assembly with two or more leaves, it is usual for the leaves firmly to be held together in the central region of the spring assembly, so that relative movement between the leaves occurs at the ends thereof. In Figure 1, one of the end portions, 11, of the leaf spring is provided with such a protective member 10, hereafter referred to as a slipper member and more fully described with reference to Figures 2, 3 and 4 of the drawings.

The slipper member 10 comprises a plate 13 of wear resistant material, e.g. steel, which lies along the upper surface of the end portion 11 of the spring leaf when fitted. To the plate 13 is welded a generally U-shaped member with two parallel downwardly extending side walls 16 bridged by a base wall 14 which lies generally parallel to the undersurface of plate 13. The distance between the undersurface of plate 13 and the base wall 14, in the direction perpendicular to the plate 13, is substantially equal to the thickness of the spring end portion 11. The base wall 14 is provided with a part-spherical upwardly extending projection 17 (which may be a separate part secured to the base wall 14, or may be formed therein by pressing), engagable with a complementary recess (shown at 25 in Figure 3) in the undersurface of the spring end portion 11. As the slipper member is viewed in plan, the bottom wall 14 is offset from the plate 13 lengthwise of the spring, such that the distance between the wall 14 and the end 15 of the plate 13 is appreciably greater than the thickness of the spring end portion 11.

At its end opposite end 15, plate 13 has a portion 19 which is of reduced width, to define shoulders at 21. A rectangular aperture 23 extends through the portion 19.

At its end portion 19, the slipper member 10 is held to the spring by a transversely extending annular metal strap or band 22. The dimensions of the strap or band 22 are such that it can be fitted over the spring portion 11 and the portion 19 of plate 13 on the top surface thereof, and then deformed by pressing in the direction indicated by arrow P thereon, to engage it within the aperture 23 to cause it to be tightened more firmly around the spring end portion and plate portion 19, thus be fixed against movement relative to the plate 13 lengthwise of the spring.

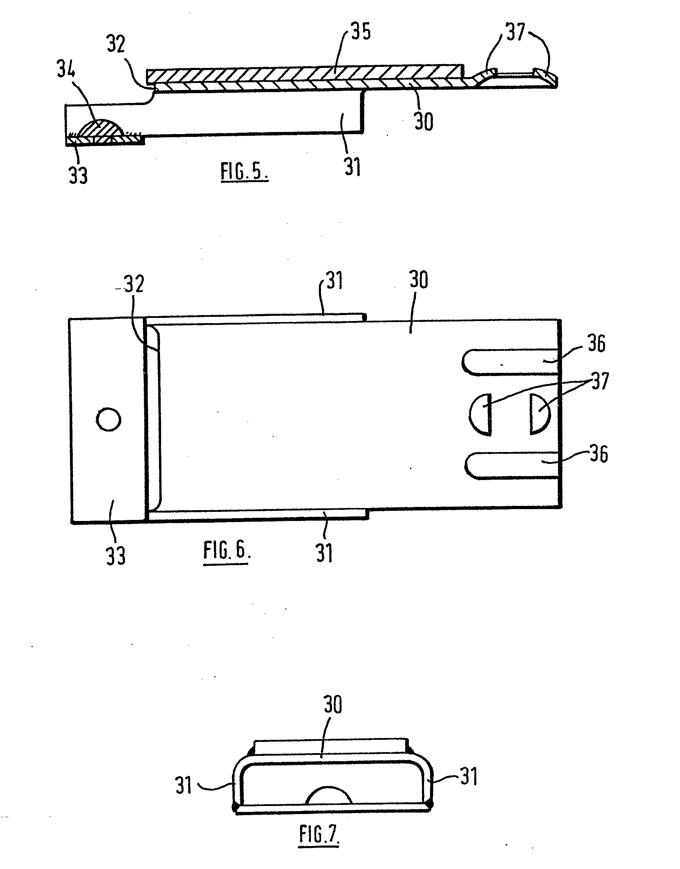

The method of assembly of the spring and slipper member is described most clearly with reference to Figures 3 and 4 of the drawings. In Figure 3, the slipper member 10 is shown oriented relative to the spring end portion 11 so that plate 13 is at an angle of approximately 45 degrees to the spring surface. In this orientation, the spring end portion 11 can be passed through the gap defined between the bottom wall 14 and the end 15 of the plate 13, since the linear distance therebetween is substantially greater than the spring thickness. The slipper member is positioned relative to the spring end portion 11 such that projection 17 is able to enter the complementary recess 25 in the undersurface of the spring, and is then moved angularly relative to the spring until plate 13 lies against the upper surface of the spring. Thereafter the strap or band 22, which has previously been positioned over the spring, can be moved over the portion 19 of the plate 13, and deformed to enter aperture 23 so that it cannot be displaced and holds the plate 13 tightly to the spring.

The slipper member 10 is thus firmly held to the spring at two positions spaced along the spring, and yet only a single fastening element in the form of band 22 has been used. The requirement for secure fixing of the slipper member has been met, without requiring the use of adhesives or the provision of holes in the spring. Further, because only a single fastening element is required, economical and rapid production of spring assemblies is possible. The recess 25 is adjacent the free end of the spring, so its effect on the overall properties of the spring is minimised.

In practice, manufacture of springs of composite material is such that there is an appreciable tolerance in the dimensions thereof. If the slipper member were dimensioned to engage correctly with the spring whose thickness is at the higher end of the tolerance range, a thinner spring may not be tightly engaged by the slipper member, with a consequent risk of its becoming detached in use. Therefore, the side walls 16 and bottom wall 14 are preferably so dimensioned that plastic deformation of the bottom wall 14 occurs during fitting of the member, as it is moved from the orientation of Figure 3 to that of Figure 4. Preferably such deformation occurs even for a spring whose thickness is at the lowest accetable value. Secure fitting of the member is thus assured for a wide range of spring thicknesses. Side walls 16 have to be spaced such that a spring of maximum acceptable width can be received therebetween.

Referring now to Figures 5 to 7 of the drawings, there is shown a further embodiment of slipper member according to the invention. This comprises a plate 30 with integral downwardly depending side walls 31 which extend lengthwise of plate 30 beyond an end 32 thereof. A bottom wall 33 is welded to bridge the side walls 31 beyond the end 32, and has a projection 34 secured thereto. In the same manner as above described in relation to the first embodiment of the invention, the linear distance between the bottom wall 33 with its projection 34, and the end 32, is such that a spring with which the slipper member is intended to be used can easily be passed therebetween when the slipper member is held at an inclination to the spring, whereas the dimensions perpendicular to plate 30 are such that plastic deformation of the bottom wall 33 will be caused when the plate 30 is oriented parallel to the spring. A further plate 35 providing a wear resistant surface is secured, e.g. welded, on the upper surface of plate 30.

At its end opposite end 32, the plate 30 is formed with two transversely spaced longitudinally extending ribs 36. Additionally two longitudinally spaced tags 37 are provided, pressed out of the plate 30. On the upper side of plate 30, a recess is defined between the ribs 36 and tags 37, into which part of a transverse band, as the band 22 of Figure 2, can be deformed by pressing so that it is tightened and cannot move lengthwise of the spring relative to the plate 30.

The method by which a slipper member as shown in Figures 5 to 7 is fitted to the spring is exactly the same as that above described with reference to Figures 3 and 4.

CLAIMS

1. A component (10), for securement to a leaf spring (11, 12) of composite material, comprising portions (13, 14; 32, 33) so disposed relative to one another as to permit the spring to be passed therebetween when the component is maintained at a first orientation (Fig.3) relative to the spring, and firmly to engage opposite surfaces of the spring when the component is maintained in a second orientation (Fig.4) relative to the spring, the component further comprising a portion (19) for engagement by a fastening element (22) for holding the component to the spring in said second orientation.

2. A component according to Claim 1 wherein the first said portions (13, 14; 32, 33) are so disposed as to cause plastic deformation of the component during movement thereof from said first to said second orientation.

3. A component according to Claim 1 or Claim 2 wherein the first said portions (13, 14; 32, 33) thereof afford generally parallel surfaces for engagement, when in said second orientation, with opposite surfaces of a spring of generally rectangular cross-sectional shape, said surfaces of the portions being perpendicularly spaced from one another by a distance substantially equal to or less than the minimum expected thickness of the spring between said opposite surfaces thereof, and being offset from one another to define a space through which the spring can be passed in said first orientation.

4. A component according to Claim 3 wherein the first said portions thereof are connected by side wall portions (16; 31) engagable with side surfaces of the spring.

5.    A component according to Claim 3 or Claim 4 wherein at least one of the said first portions thereof has a formation (17; 34) engagable with a complementary formation (25) of the spring to prevent relative movement, lengthwise of the spring, between the spring and component.

6.    A component according to Claim 5 wherein said formation comprises a projection engagable with a recess in the spring.

7.    A component according to any one of the preceding claims, comprising a slipper member affording a wear-resistant surface.

8.    An assembly comprising a component according to any one of the preceding claims and a leaf spring, the leaf spring being engaged between the first said portions of the component which is held in said second orientation by a fastening element.

9.    An assembly according to Claim 8 wherein said fastening element comprises an element extending transversely around the component and spring.

10.    An assembly according to Claim 9 wherein said fastening element comprises an annular metal band (22), deformed to engage the component and spring.

11.    An assembly according to Claim 10 wherein said band is deformed into an aperture or recess in the component.

12.    An assembly comprising a component according to Claim 6 and a leaf spring, the leaf spring being engaged between the first said portions of the component which is held in said second orientation by a fastening element, and the projection of the component engaging a recess in the spring, wherein said recess is adjacent a free end of the spring.

0246810

FIG.1.

FIG. 2.

FIG. 3.

FIG.4.

024681

FIG.5.

FIG.6.

FIG.7.

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| P,Y | WO-A-8 602 887  (BERTIN & CIE) <br> * Page 8, line 9 - page 9, line 9; claim 4; figures 1,10,11 * | 1-11 | B 60 G   11/12 <br> F 16 F    1/36 |
| P,Y | GB-A-2 174 174  (G.K.N.) <br> * Whole document * | 1-11 | |
| A | EP-A-0 132 074  (G.K.N.) <br> * Page 6, lines 1-4; figure 5 * | 1,12 | |

| TECHNICAL FIELDS SEARCHED (Int Cl 4) |
|---|
| F 16 F    1 <br> B 60 G   11 |

The present search report has been drawn up for all claims

| Place of search | Date of completion of the search | Examiner |
|---|---|---|
| THE HAGUE | 08-08-1987 | LINTZ C.H. |